# EUROPÄISCHE PATENTSCHRIFT

(11) **EP 2 458 275 B1**
(45) Veröffentlichungstag und Bekanntmachung des Hinweises auf die Patenterteilung: **01.01.2014**
(21) Anmeldenummer: 10192787.9
(22) Anmeldetag: 26.11.2010
(51) Int. Cl.: F23B 80/04, F23J 1/02, F23J 3/06, F23L 15/04, F24H 9/00

(54) **Brennofen mit Luftvorwärmung, insbesondere zu Verbrennung von Holzschnitzeln**
Furnace wih combustion air pre-heating, in particular for the combustion of wood chips
Four avec pre-chauffage d'air, en particulier pour la combustion de copeaux de bois

(43) Veröffentlichungstag der Anmeldung: 30.05.2012
(73) Patentinhaber: Ulrich Brunner GmbH, 84307 Eggenfelden (DE)
(72) Erfinder: Reindl, Frank, 84326 Rimbach (DE)
(74) Vertreter: Rothkopf, Ferdinand

(56) Entgegenhaltungen:
- EP-A2- 0 915 289
- US-A- 3 797 415
- US-A1- 2004 060 553

## Beschreibung

Die vorliegende Erfindung betrifft einen Brennofen zur Verbrennung von Brennmaterial bestehend aus nachwachsenden Rohstoffen, wie Holz, vornehmlich Holzschnitzel, oder Kohle oder Biomasse oder Müll bzw. eine Mischung daraus.

Seit geraumer Zeit sind Brennöfen im Einsatz, die Brennmaterial verbrennen, das weder Öl noch Gas ist, sondern im Wesentlichen aus nachwachsenden Rohstoffen, wie Holz, besteht. Zudem sind derartige "Holzöfen" in der Lage, auch andere feste Brennstoffe wie beispielsweise Kohle oder Biomasse oder Müll zu verbrennen.

Derartige Brennöfen weisen einen Kesselkörper mit einem Brennraum auf, in dem die Verbrennung stattfindet, wobei der Kesselkörper eine Umwandung aufweist, in der eine Eintrittsöffnung für das Brennmaterial sowie eine Austrittsöffnung zur Ausbringung des Abgases aus dem Brennraum ausgebildet sind.

Um das durch die Eintrittsöffnung zugeführte Brennmaterial zu verbrennen, ist ein Brennrost vorgesehen, auf dem das Brennmaterial zunächst vergast und anschlie-βend verbrannt wird, wobei die zur Verbrennung notwendige Verbrennungsluft aus einem Luftkanal gespeist wird und die Verbrennungsluft mittels eines Gebläses in den Luftkanal eingeblasen wird.

Oberhalb des Brennrostes ist in dem Kesselkörper ein Abgaskanal ausgebildet, der sich im Wesentlichen mäandrierend ausgehend von dem Brennrost durch den Brennraum erstreckt, wobei oberhalb des Brennrostes eine weitere Verbrennung von Gaspartikeln, insbesondere von Kohlenmonoxid-Partikeln, erfolgt und dadurch eine Umwandlung in CO₂-Partikel bzw. -Molekühle erreicht werden soll.

Bei der Verbrennung entsteht erhebliche Wärme, die zum Aufheizen der Umwandung des Kesselkörpers führt. Um die Umwandung zu kühlen, wird herkömmlicherweise Flüssigkeit, insbesondere Wasser in Kanäle eingeführt, die in der Umwandung des Kesselkörpers ausgebildet sind. Nachteilig ist hierbei, dass bei Stromerzeugung der Wirkungsgrad dadurch vermindert wird, dass ein Wärmeverlust durch eine Kühlwasseraufheizung und den notwendigen Wärmetausch besteht. Weiterhin ist der Einbau eines Sicherheitswärmetauschers notwendig, der eine Überhitzung des Kühlwassers sicher verhindern soll. Dies ist sehr aufwändig. Schließlich ist das wasserdichte Schweißen sehr teuer.

Das Dokument EP 0 915 289 A2 offenbart einen Brennofen zur Vergasung und Verbrennung von nachwachsenden Rohstoffen aus pelletierter Biomasse. Um den Kesselkörper herum befindet sich ein von einer Umwandung gebildeter Strömungskanal für von einem Gebläse gespeiste Verbrennungsluft. Diese wird darin vorgewärmt und kühlt gleichzeitig die Umwandung. Im Abgaskanal, der sich von einem Brennrost mäandrierend ausgehend durch den Brennraum erstreckt findet, eine weitere Verbrennung statt.

Das Dokument US 3 797 415 A beschreibt einen ähnlichen Brennofen.

Der vorliegenden Erfindung liegt deshalb die Aufgabe zugrunde, einen Brennofen der eingangs genannten Art zu schaffen, mit dem eine erheblich effizientere Wirkungsweise erzielt wird, und der in jeder Betriebssituation einen zufriedenstellenden Ausbrand der Brenngase ermöglicht.

Diese Aufgabe wird durch die Merkmale des Patentanspruchs 1 gelöst.

Dadurch dass sich der Luftkanal in wenigstens einer Schleife zirkulierend um den Brennraum herum erstreckt, so dass die zugeführte Verbrennungsluft gleichzeitig als Kühlluft zur Kühlung der Umwandung des Kesselkörpers dient, wird erreicht, dass die Umwandung des Kesselkörpers in allen Betriebszuständen ausreichend gekühlt wird, wodurch weitere Kühlungsmaßnahmen des Kesselkörpers vermieden werden können und zudem die dem Brennrost zugeführte Verbrennungsluft entsprechend aufgeheizt wurde, was eine deutliche Erhöhung der Verbrennungswirkung schafft, wobei zusätzlich der große Vorteil erreicht wird, dass der erfindungsgemäße Brennofen universell Verwendung finden kann und anfallendes aufgeheiztes Kühlwasser vermieden wird. Dies führt gerade bei feuchten Brennstoffen zu erheblichen Vorteilen, weil eine schnelle Verdampfung des festen Anteils im Brennstoff erfolgt und dadurch die Verweilzeit des Brennguts auf dem Brennrost wesentlich verkürzt werden kann.

Vorteilhafterweise ist die Umwandung des Kesselkörpers doppelwandig ausgebildet, mit einer äußeren und einer inneren Wand, zwischen denen sich der zirkulierende Luftkanal befindet. Somit wird vorteilhafterweise auf besonders einfache Weise eine Kühlung der Umwandung erreicht und insbesondere die durch den Verbrennungsprozess entstehende Abwärme für die Erwärmung der Verbrennungsluft genutzt, was zu einer erheblichen Steigerung des Wirkungsgrads des erfindungsgemäßen Brennofens führt.

Dadurch, dass sich das Gebläse an der Oberseite des Brennraums befindet, wovon aus sich der Luftkanal erstreckt, wird einerseits die mögliche längste Strecke zum Kühlen des Kesselkörpers verwirklicht und andererseits eine maximale Erwärmung der Verbrennungsluft erzielt.

Weiterhin sind mit großem Vorteil in der inneren Wand des Kesselkörpers an jeder beliebigen Stelle Öffnungen vorsehbar, durch die Luft aus dem Luftkanal in den Brennraum eindringen kann. Durch diese Zusatzluft wird eine sichere Vervollständigung der Verbrennung im Abgas erreicht.

Zur Erhöhung der optimalen Verbrennung über den gesamten Betriebsbereich des erfindungsgemäßen Brennofens ist im Bereich der Öffnungen zwischen Luftkanal und Brennraum ein separater Zuluftkanal vorgesehen. Dieser separate Zuluftkanal ermöglicht über steuerbare Öffnungen die gesteuerte Zufuhr von zusätzlicher Verbrennungsluft in den Brennraum.

Vorteilhafterweise erfolgt die steuerbare Zufuhr von Verbrennungsluft mittels wenigstens eines, vorzugsweise motorisch betriebenen Ventils, das das Öffnen bzw. Schließen einer zugeordneten Öffnung zwischen Luftkanal und Zuluftkanal steuert.

Damit eine optimaler Ausbrand des Brennmaterials erreicht wird, weist der Brennofen oberhalb des Brennrosts ausgehend von einer vertikalen Seitenwand der Umwandung eine schräg nach oben vorspringende Zwischenwand auf, die das vom Brennrost aufsteigende Abgas ablenkt zu einer Öffnung, oberhalb der eine weitere zumindest teilweise schräg nach unten ausgerichtete Zwischenwand vorgesehen ist.

Weiterhin ist vorteilhaft, dass die Öffnungen für die steuerbare Zufuhr von Verbrennungsluft oberhalb der Öffnung im Abgaskanal bzw. im weiteren Verbrennungsabschnitt vorgesehen sind.

Insgesamt wird somit auf einfache Weise der optimale Verbrennungszustand im Brennraum gesteuert, wodurch ein praktisch kohlenmonoxidfreies Abgas erreicht wird.

Weitere Einzelheiten, Merkmale und Vorteile der vorliegenden Erfindung ergeben sich aus der nachfolgenden Beschreibung unter Bezugnahme auf die beigefügten Zeichnungen. In denen zeigt:
- Fig. 1: eine perspektivische, schematische Schnittansicht eines erfindungsgemäßen Brennofens;
- Fig. 2: eine gerade Schnittansicht des Brennofens gemäß Fig. 1;
- Fig. 3: eine perspektivische Teilschnittansicht auf die Einlassseite des erfindungsgemäßen Brennofens von Fig. 1 und 2 u. a. gemäß der Linie D-D von Fig. 2;
- Fig. 4: eine perspektivische Ansicht von Hinten auf die Außenseite der inneren Wand der Umwandung des erfindungsgemäßen Brennofens von Fig. 1 und 2 mit schematisch dargestellter Austrittsöffnung;
- Fig. 5: schematisch den zirkulierenden Luftkanal mit drei Verteilungskanälen der dem Brennrost zugeführten Verbrennungsluft;
- Fig. 6: in perspektivischer Teilschnittansicht den Zuluftkanal mit motorisch verschließbarer Öffnung; und
- Fig. 7: in Schnittdarstellung den motorisch verschließbaren Zuluftkanal gemäß Fig. 6

In den Figuren sind gleiche Elemente mit denselben Bezugsziffern bezeichnet.

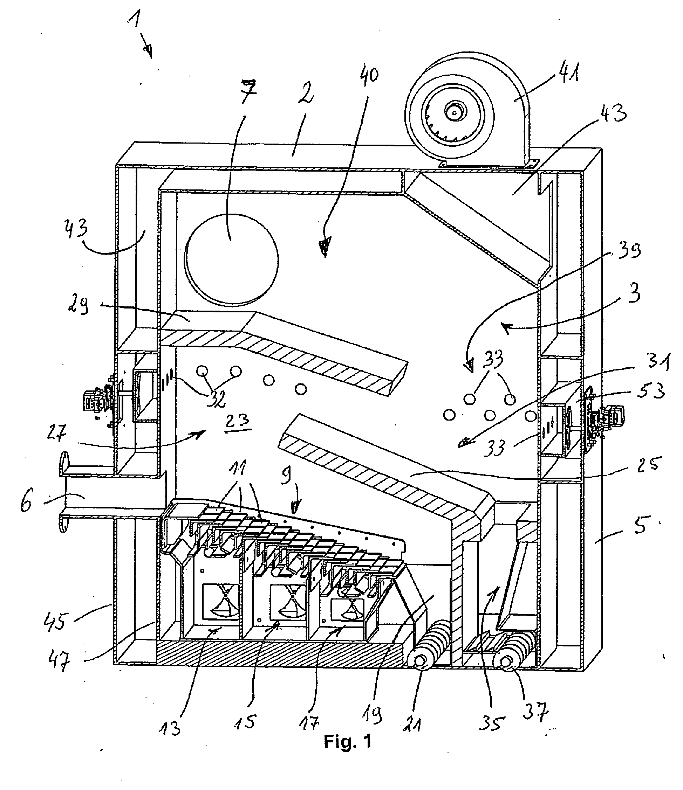

In Fig. 1 ist in perspektivischer Ansicht der erfindungsgemäße Brennofen 1 in perspektivischer Darstellung dargestellt. Er weist einen Kesselkörper 2 auf, der einen Brennraum 3 umgibt. Der Kesselkörper 2 weist eine Umwandung 5 auf, die den Brennraum 3 vollständig umgibt.

In der Umwandung 5 ist eine Eintrittsöffnung 6 vorgesehen, die für das Zuführen des Brennguts dient, welches in dem Brennofen 1 verbrannt werden soll. Wie aus Fig. 1 ersichtlich, ist weiterhin eine Austrittsöffnung 7 vorgesehen, die dazu dient, das Verbrennungsgas einem entsprechenden Wärmetauscher (nicht dargestellt) zur Verfügung zu stellen.

Hinter der Eintrittsöffnung 6 für das Brenngut ist ein Brennrost 9 vorgesehen, der als Vorschubrost ausgebildet ist, und hierzu horizontal bewegliche Auflageflächen 11 für das Brenngut aufweist.

Der Brennrost 9 weist im dargestellten Ausführungsbeispiel gemäß Fig. 1 drei Brennkammern 13, 15 und 17 auf, deren Luftversorgung einzeln steuerbar ist, um so eine angepasste Verbrennung von Brenngut zu ermöglichen.

Die sich hin und her bewegenden Auflageflächen 11 fördern das Brenngut auf dem Brennrost 9 abwärts, und nicht verbranntes bzw. verglühtes Brenngut fällt in einen Brenngutschacht 19, in dem eine Förderschnecke 21 angeordnet ist, die das unverbrannte Brenngut, im Wesentlichen in Form von Asche, seitlich nach Außen außerhalb des Brennofens 1 führt.

Das auf den Auflageflächen 11 liegende Brenngut bzw. das oberhalb der Auflageflächen schwebende Brenngut wird dort verbrannt bzw. verglüht und die Verbrennungsabgase steigen in einem Abgaskanal 23 nach oben.

Der Abgaskanal 23 hat eine mäandrierende Ausbildung, die dadurch erzeugt wird, dass oberhalb des Brennrosts 9 eine schräg nach oben sich erstreckende Zwischenwandung 25 vorgesehen ist, die eine Öffnung 27 freilässt, oberhalb der eine weitere Zwischenwandung 29 vorgesehen ist, von der wenigstens ein Teil sich wieder schräg nach unten erstreckt, um das Abgas in dem Abgaskanal 27 wieder (leicht) nach unten zu leiten. Oberhalb der Öffnung 27 befinden sich in der Umwandung zum Brennraum 3 gegebenenfalls verschließbare Öffnungen 32, durch die zusätzliche Verbrennungsluft eingebracht werden kann. Der Öffnungsgrad der Öffnungen 32 kann veränderbar sein, je nach Bedarf von zusätzlicher Verbrennungsluft.

Gelenkt von der Zwischenwandung 29 erreicht das Abgas einen weiteren Verbrennungsabschnitt 31, in dem durch vorzugsweise steuerbare Öffnungen 33 weitere Verbrennungsluft zugeführt wird. In dem Verbrennungsabschnitt 31 erfolgt auch eine Entaschung dadurch, dass Aschepartikel in einen Entaschungsbereich 35 absinken können und mittels einer Förderschnecke 37 aus dem Brennraum 3 wieder ausgebracht werden können.

Durch Zuführen von Verbrennungsluft durch die Öffnungen 33 wird insbesondere Kohlenmonoxidanteil des Abgases weiter verbrannt, wodurch Kohlendioxid entsteht, das über eine Öffnung 39 zwischen Zwischenwandung 29 und Umwandung 5 den Abgaskanalabschnitt 40 erreicht von wo es zu der Austrittsöffnung 7 gebracht wird und dort der weiteren Verwendung, insbesondere einem Wärmetauscher, zugeführt wird.

Die Verbrennungsluft wird dem Brennofen 1 mittels eines Gebläses 41 zugeführt und gelangt von außerhalb in einen um den Brennraum 3 zirkulierenden Luftkanal 43, der in der Umwandung 5 ausgebildet ist, bis zu dem Brennrost 9. Hierzu weist die Umwandung 5 eine äußere Wand 45 und eine innere Wand 47 auf, die sich beabstandet von der äußeren Wand 45 erstreckt. Durch die in der Umwandung 5 zirkulierende, von außen über das Gebläse 41 zugeführte Umgebungsluft kann diese als Verbrennungsluft einerseits bis zur Verbrennung aufgeheizt werden, was deren Wirkungsgrad deutlich erhöht, wobei sie gleichzeitig die Umwandung 5 kühlt, was zusätzliche Kühlmittel, insbesondere flüssige Kühlmittel einspart.

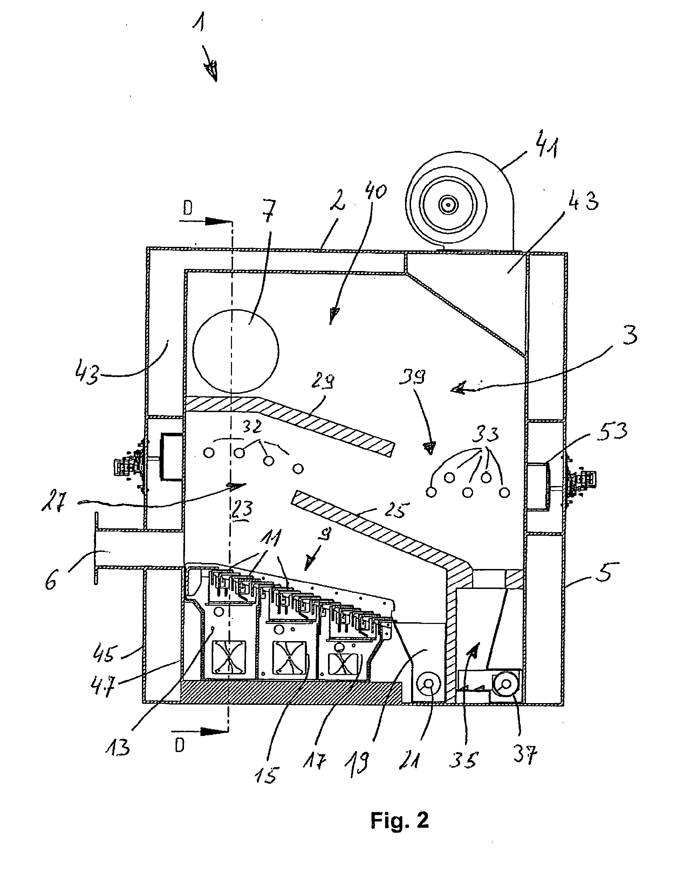

In Fig. 2 ist ähnlich zu Fig. 1 der erfindungsgemäße Brennofen 1 in Schnittansicht dargestellt. Insbesondere wird hier der mäandrierende Verlauf des Abgaskanals 23 oberhalb des Brennrosts 9 über die Öffnung 27 zu dem Verbrennungsabschnitt 31 und von dort zur Austrittsöffnung 7 deutlich.

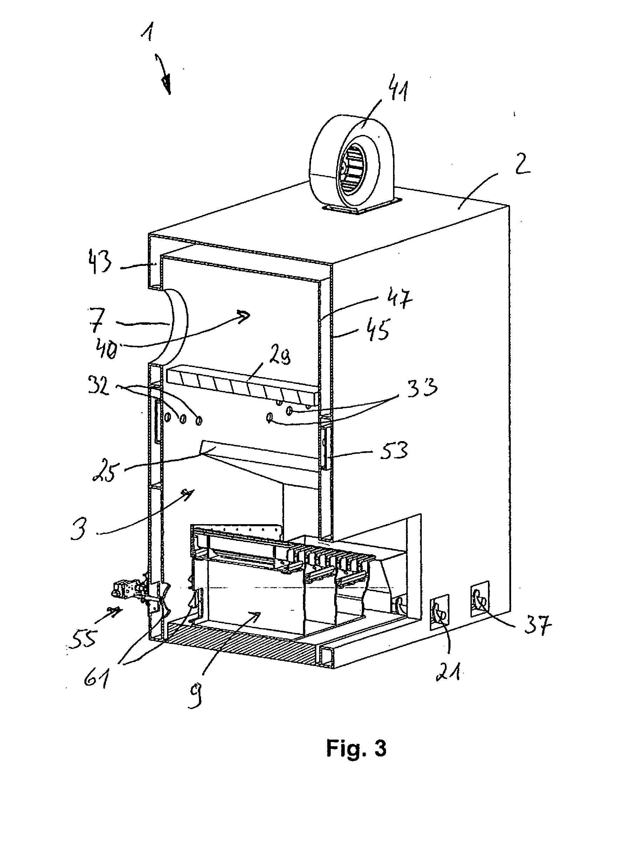

Fig. 3 zeigt den erfindungsgemäßen Brennofen 1 in perspektifischer Ansicht und geschnitten entlang der Linie D-D von Fig. 2, wobei im Bereich des Brennrostes 9 die Umwandung 5 noch weiter ausgespart ist.

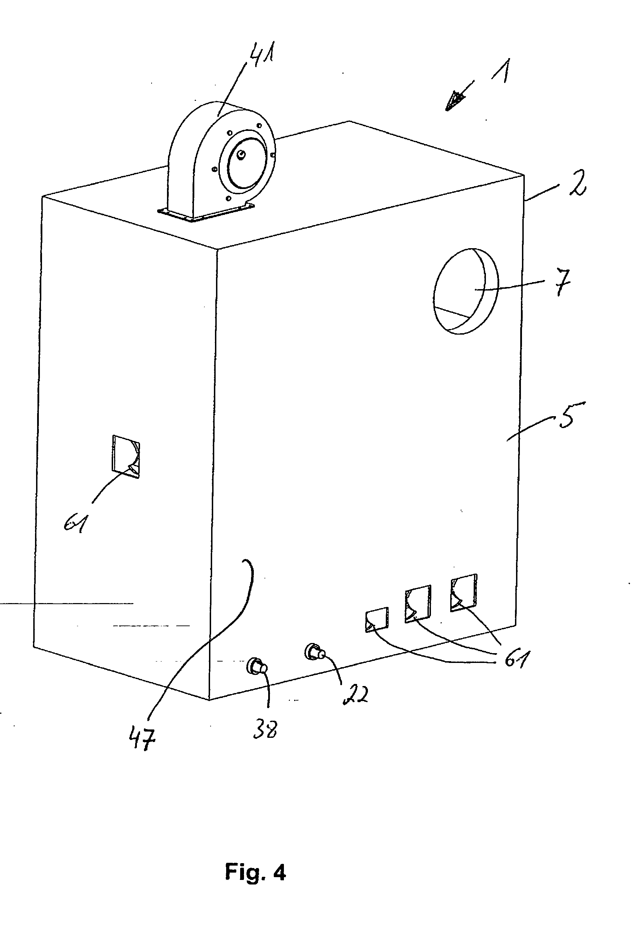

Fig. 4 zeigt die Außenseite der inneren Wand 47 der Umwandung 5 des erfindungsgemäßen Brennofens 1 in einer perspektivischen Ansicht von der Rückseite. Dort sieht man auch die Welle 22 der Förderschnecke 21 und die Welle 38 der Förderschnecke 37.

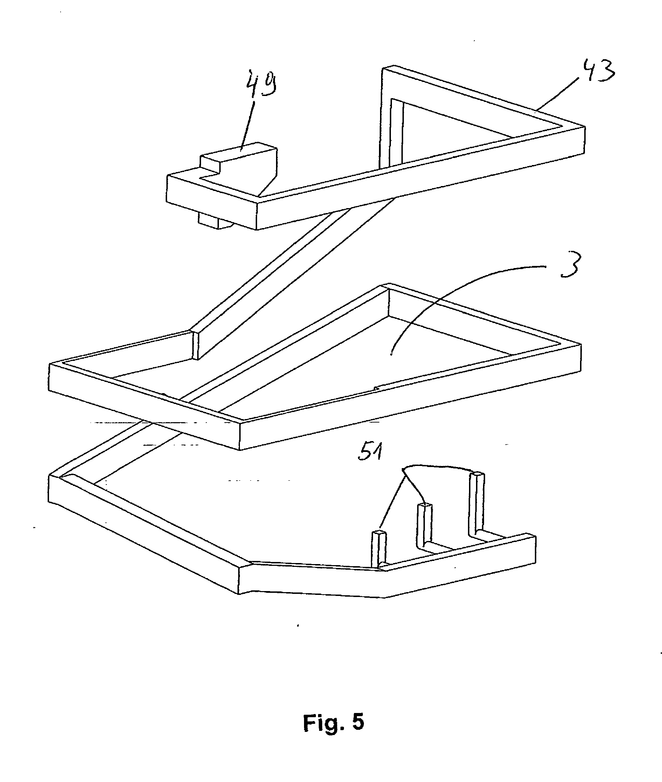

In Fig. 5 ist schematisch der zirkulierende Luftkanal 43 dargestellt. Dieser verläuft von einem oberen Abschnitt 49, der von dem Gebläse 41 gespeist wird, in zwei Schleifen in der Umwandung 5 zwischen äußerer Wand 45 und innerer Wand 47 um den Brennraum 3 und speist an seinem unteren Ende mittels dreier Endabschnitte 51 entsprechend steuerbar die drei Kammern 13, 15 und 17 des Brennrosts 9.

Mithilfe dieses zirkulierenden Luftkanals 43 wird die Umwandung 5 des Brennofens 1 gekühlt und folgende weitere erhebliche Vorteile erreicht. Aufgrund des Wärmetauscheffekts zwischen dem heißen Brennraum 3 und der über den oberen Abschnitt 49 eingeführten Verbrennungsluft, die als Kühlluft der Umwandung 5 dient, wird die Verbrennungsluft erheblich aufgeheizt, bevor sie dem Brennrost 9 zugeführt wird. Dies führt einerseits zu einer erheblich verbesserten Verbrennung und andererseits wird die durch die Verbrennung im Brennraum 3 abgestrahlte Wärme der einströmenden Verbrennungsluft zugeführt, wodurch ein deutlich verbesserter Verbrennungsprozess verwirklicht wird, der sich durch deutlich verringerte Energieverluste auszeichnet. Die im Stand der Technik bisher notwendigerweise vorgenommenen aufwändigen Kühlmaßnahmen können entfallen.

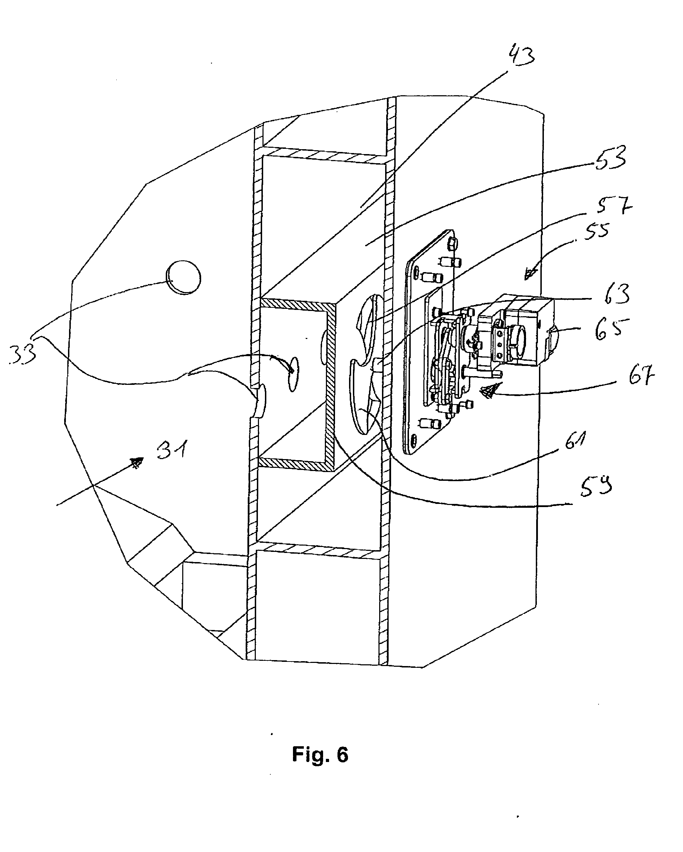

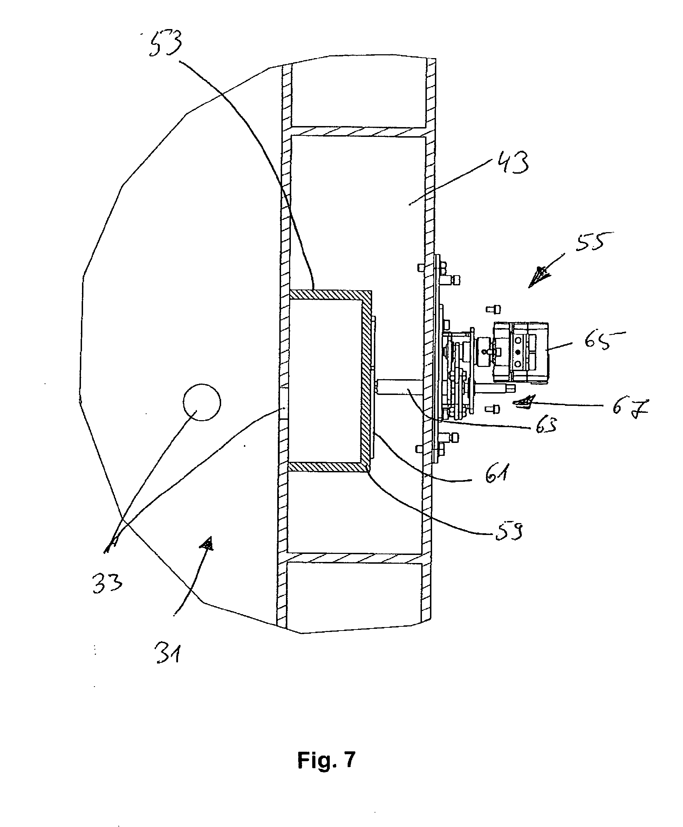

Es wird nunmehr Bezug genommen auf die Figuren 6 und 7, die einen Ausschnitt des Luftkanals 43 zeigen. Wie aus den Figuren 6 und 7 besonders deutlich ersichtlich, ist in dem Luftkanal 43 ein Zuluftkanal 53 ausgebildet, über den durch die Öffnungen 33 bzw. 32 (siehe Fig. 1 bis 3) Verbrennungsluft in den Verbrennungsabschnitt 31 eingeführt werden kann. Die Zuluftmenge wird vorteilhafterweise gesteuert durch motorisch betriebene Ventile 55, die Öffnungen 57 in der Wandung 59 des Zuluftkanals 53 mittels drehbaren Ventilschiebern 61 öffnen bzw. verschließen können. Die Ventilschieber 61 sind drehbar auf einer Welle 63 angeordnet und deren Drehung wird mittels eines steuerbaren Motors 65 über ein Getriebe 67 vorgenommen.

Mithilfe der zusätzlichen Zuluftkanäle 53 kann die Verbrennung im Brennraum 3 optimal gesteuert werden, je nachdem, welche Leistung von dem erfindungsgemäßen Brennofen 1 gefordert wird. Dabei kann durch entsprechende Ansteuerung der die Ventilschieber 61 betätigenden Motore 65 eine optimale Zuluftsteuerung und Anpassung an die geforderte Brennleistung erreicht werden.

Der erfindungsgemäße Brennofen zeichnet sich vorteilhafterweise dadurch aus, dass er keine oder nahezu keine Schadstoffe nach der Verbrennung abgibt, sondern praktisch nur CO₂ als Abgas vorliegt. Somit ist der Brennofen der vorliegenden Erfindung den Brennöfen des bisherigen Standes der Technik weitaus überlegen.

## Patentansprüche

1. Brennofen (1) zur Verbrennung von Brennmaterial bestehend aus nachwachsenden Rohstoffen, wie Holz, vornehmlich Holzschnitzel, Kohle, Biomasse oder Müll bzw. eine Mischung daraus, mit
einem Kesselkörper (2) mit einem Brennraum (3), in dem die Verbrennung stattfindet, wobei der Kesselkörper (2) eine Umwandung (5) aufweist, in der eine Eintrittsöffnung (6) für das Brennmaterial sowie eine Austrittsöffnung (7) zur Ausbringung des Abgases aus dem Brennraum (3) ausgebildet sind,
einem Brennrost (9) auf dem das Brennmaterial vergast und verbrannt wird und der mit Verbrennungsluft aus einem Luftkanal (43) gespeist wird, die mittels eines Gebläses (41) in den Luftkanal (43) eingeblasen wird, und
einem Abgaskanal (23), der sich im Wesentlichen mäandrierend ausgehend von dem Brennrost (9) durch den Brennraum (3) erstreckt und in dem eine weitere Verbrennung stattfindet,
**dadurch gekennzeichnet, dass**
sich der Luftkanal (43) in wenigstens einer Schleife zirkulierend um den Brennraum (3) herum erstreckt, so dass die zugeführte Verbrennungsluft gleichzeitig als Kühlluft zur Kühlung der Umwandung (5) des Kesselkörpers (2) dient.

2. Brennofen nach Anspruch 1, **dadurch gekennzeichnet, dass** die Umwandung (5) doppelwandig ausgebildet ist, mit einer äußeren (45) und einer inneren (47) Wand und sich der zirkulierende Luftkanal (43) dazwischen befindet.

3. Brennofen nach Anspruch 1 oder 2, **dadurch gekennzeichnet, dass** das Gebläse (41) an der Oberseite des Brennraums (3) angeordnet ist, wovon aus sich der Luftkanal (43) erstreckt.

4. Brennofen nach einem der Ansprüche 1 bis 3, **dadurch gekennzeichnet, dass** in der inneren Wand (47) des Kesselkörpers (2) und im Bereich des diesen umgebenden Luftkanals (43) Öffnungen (32, 33) vorgesehen sind, durch die Luft aus dem Luftkanal in den Brennraum (3) eindringen kann.

5. Brennofen nach Anspruch 4, **dadurch gekennzeichnet, dass** im Bereich der Öffnungen (33) zwischen Luftkanal (43) und Brennraum (3) ein separater Zuluftkanal (53) vorgesehen ist.

6. Brennofen nach Anspruch 5, **dadurch gekennzeichnet, dass** der Zuluftkanal (53) über steuerbare Öffnungen (57) mit dem Luftkanal (43) in Verbindung steht, wodurch Verbrennungsluft gesteuert in den Brennraum (3) eingespeist werden kann.

7. Brennofen nach Anspruch 6, **dadurch gekennzeichnet, dass** die steuerbare Zufuhr von Verbrennungsluft mittels wenigstens eines, vorzugsweise motorisch betriebenen Ventils (55) erfolgt, das das Öffnen bzw. Schließen einer zugeordneten Öffnung zwischen Luftkanal (43) und Zuluftkanal (53) steuert.

8. Brennofen nach einem der Ansprüche 1 bis 7, **dadurch gekennzeichnet, dass** bei dem oberhalb der Brennrosts (9) ausgehend von einer vertikalen Seitenwand der Umwandung (5) eine schräg nach oben vorspringende Zwischenwand (25) vorgesehen ist, die das vom Brennrost (9) aufsteigende Abgas ablenkt zu einer Öffnung (27) oberhalb der eine weitere schräg nach unten ausgerichtete Zwischenwand (29) vorgesehen ist.

9. Brennofen nach Anspruch 8, **dadurch gekennzeichnet, dass** die Öffnungen (32 bzw. 33) für die steuerbare Zufuhr von Verbrennungsluft oberhalb der Öffnung (27) im Abgaskanal (23) bzw. im weiteren Verbrennungsabschnitt (31) vorgesehen sind.

## Claims

1. A furnace (1) for the combustion of fuel comprising renewable raw materials such as wood, especially woodchip, coal, biomass or waste or a mix thereof, having
a boiler body (2) with a combustion chamber (3) in which the combustion takes place, wherein the boiler body (2) has a surrounding wall (5) in which an entry opening (6) for the fuel and an exit opening (7) for discharging the exhaust gas from the combustion chamber (3) are constructed,
a combustion grate (9) on which the fuel is gasified and burned and which is supplied with combustion air from an air channel (43) which is blown into the air channel (43) by means of a fan (41), and
an exhaust-gas channel (23) which extends in substantially meandering manner through the combustion chamber (3) starting from the combustion grate (9) and in which further combustion takes place,
**characterised in that**
the air channel (43) extends in at least a loop circulating around the combustion chamber (3) so that the supplied combustion air serves at the same time as cooling air for cooling the surrounding wall (5) of the boiler body (2).

2. A furnace according to Claim 1, **characterised in that** the surrounding wall (5) is a double-walled construction with an outer (45) and an inner (47) wall and the circulating air channel (43) is located between these.

3. A furnace according to Claim 1 or 2, **characterised in that** the fan (41) is arranged on the top of the combustion chamber (3) from where the air channel (43) extends.

4. A furnace according to one of Claims 1 to 3, **characterised in that** openings (32, 33), through which air can penetrate into the combustion chamber (3) from the air channel, are provided in the inner wall (47) of the boiler body (2) and in the region of the air channel (43) surrounding this latter.

5. A furnace according to Claim 4, **characterised in that** a separate supply-air channel (53) is provided in the region of the openings (33) between the air channel (43) and the combustion chamber (3).

6. A furnace according to Claim 5, **characterised in that** the supply-air channel (53) is in communication with the air channel (43) by way of controllable openings (57) as a result of which combustion air can be fed into the combustion chamber (3) in controlled manner.

7. A furnace according to Claim 6, **characterised in that** the controllable supply of combustion air takes place by means of at least one, preferably motor-operated, valve (55) which controls the opening and closing of an associated opening between the air channel (43) and the supply-air channel (53).

8. A furnace according to one of Claims 1 to 7, **characterised in that** in which, provided above the combustion grate (9), starting from a vertical side wall of the surrounding wall (5), there is an intermediate wall (25) which projects upwards at an angle and diverts the exhaust gas rising from the combustion grate (9) to an opening (27) above which a further intermediate wall (29), which is aligned downwards at an angle, is provided.

9. A furnace according to Claim 8, **characterised in that** the openings (32 and 33) for the controllable supply of combustion air are provided above the opening (27) in the exhaust-gas channel (23) and in the further combustion portion (31).

## Revendications

1. Four (1) servant pour combustion d'un combustible composé de matières premières biologiques, telles que du bois, de préférence des copeaux de bois, du charbon, de la biomasse ou des détritus et/ou d'un mélange de ceux-ci, avec :
un corps de cuve (2) doté d'une chambre de combustion (3) dans laquelle la combustion se produit, le corps de cuve (2) comportant une paroi périphérique (5) dans laquelle une ouverture d'entrée (6) est réalisée pour amener le combustible et dans laquelle une ouverture de sortie (7) est réalisée pour évacuer le gaz d'échappement hors de la chambre de combustion (3) ;
une grille de combustion (9) sur laquelle le combustible est gazé et consumé, ladite grille étant alimentée en air de combustion provenant d'un canal d'air (43), ledit air étant insufflé à l'aide d'une soufflerie (41) prévue dans le canal d'air (43) ; et
un canal de gaz d'échappement (23) prenant pour l'essentiel une forme sinueuse à partir de la grille de combustion (9) en passant à travers la chambre de combustion (3) et dans lequel une combustion supplémentaire se produit ;
**caractérisé en ce que** :
le canal d'air (43) s'étend au moins dans une boucle circulant autour de la chambre de combustion (3), de sorte que l'air de combustion amené sert en même temps d'air de refroidissement servant à refroidir la paroi périphérique (5) du corps de cuve (2).

2. Four selon la revendication 1, **caractérisé en ce que** la paroi périphérique (5) est réalisée avec une double paroi, avec une paroi extérieure (45) et une paroi intérieure (47) et que le canal d'air (43) circulant est placé entre ces deux parois.

3. Four selon la revendication 1 ou 2, **caractérisé en ce que** la soufflerie (41) est disposée au niveau du côté supérieur de la chambre de combustion (3) d'où part le canal d'air (43).

4. Four selon l'une quelconque des revendications 1 à 3, **caractérisé en ce que** des ouvertures (32, 33) à travers lesquelles l'air sortant du canal d'air peut pénétrer dans la chambre de combustion (3) sont prévues dans la paroi intérieure (47) du corps de cuve (2) et dans la zone du canal d'air (43) l'entourant.

5. Four selon la revendication 4, **caractérisé en ce qu'**un canal d'alimentation en air (53) séparé est prévu dans la zone des ouvertures (33) placées entre le canal d'air (43) et la chambre de combustion (3).

6. Four selon la revendication 5, **caractérisé en ce que** le canal d'alimentation en air (53) est relié au canal d'air (43) par le biais d'ouvertures (57) commandables à travers lesquelles l'air de combustion peut être amené de façon commandée dans la chambre de combustion (3).

7. Four selon la revendication 6, **caractérisé en ce que** l'alimentation commandable en air de combustion se produit à l'aide d'au moins une soupape (55) entraînée de préférence de façon motorisée qui commande l'ouverture et/ou la fermeture d'une ouverture associée prévue entre le canal d'air (43) et le canal d'alimentation en air (53).

8. Four selon l'une quelconque des revendications 1 à 7, **caractérisé en ce qu'**une paroi intermédiaire (25) saillant en oblique est prévue au-dessus de la grille de combustion (9) en partant d'une paroi latérale verticale de la paroi périphérique (5) déviant le gaz d'échappement remontant de la grille de combustion (9) en direction d'une ouverture (27) au-dessus de laquelle une paroi intermédiaire (29) supplémentaire orientée vers le bas est prévue.

9. Four selon la revendication 8, **caractérisé en ce que** les ouvertures (32 et/ou 33) prévues pour l'alimentation commandable en air de combustion sont prévues au-dessus de l'ouverture (27) placée dans le canal de gaz d'échappement (23) et/ou dans la section de combustion (31) supplémentaire.
